# EUROPÄISCHE PATENTANMELDUNG

(11) **EP 2 706 250 A1**
(43) Veröffentlichungstag der Anmeldung: **12.03.2014**
(21) Anmeldenummer: 13182964.0
(22) Anmeldetag: 04.09.2013
(51) Int. Cl.: F16C 41/00, F16C 41/04, F16C 19/52, G01M 13/04

(54) **Verfahren zur Überwachung eines Wälzlagers und Wälzlager**

(30) Priorität: 06.09.2012 DE 102012215807
(71) Anmelder: Aktiebolaget SKF, 41 550 Göteborg (SE)
(72) Erfinder: Schnabl, Gregor, 4400 Steyr (AT); Schweitzer, Ferdinand, 3352 St. Peter in der Au (AT)
(74) Vertreter: Schonecke, Mitja

(57) **Zusammenfassung**

Die Erfindung betrifft ein Verfahren zur Überwachung eines Wälzlagers (1), wobei an oder in mindestens einem der Lagerringe (2, 3) des Wälzlagers (1) ein Sensorelement (4) angeordnet ist, das mit einem Speicherelement (5) in Verbindung steht, wobei das Sensorelement (4) zur Erfassung von Erschütterungen ausgebildet ist. Um insbesondere eine verbesserte Schadenszuordnung vornehmen zu können, sieht das Verfahren die Schritte vor: a) Herstellen des Wälzlagers (1) und Ausstattung des Wälzlagers (1) mit dem mindestens einen Sensorelement (4) und dem Speicherelement (5); b) Aktivieren des Sensorelements (4) und/oder des Speicherelements (5) zur Messung und Speicherung von Erschütterungen; c) Transport des Wälzlagers (1) zu seinem Bestimmungsort; d) Einbau des Wälzlagers (1) in die maschinenbautechnische Anwendung, für die es vorgesehen ist; e) Auslesen der im Speicherelement (5) gespeicherten Daten. Des Weiteren betrifft die Erfindung ein Wälzlager zur Durchführung des Verfahrens.

## Beschreibung

Die Erfindung betrifft ein Verfahren zur Überwachung eines Wälzlagers, wobei an oder in mindestens einem der Lagerringe des Wälzlagers ein Sensorelement angeordnet ist, das mit einem Speicherelement in Verbindung steht, wobei das Sensorelement zur Erfassung von Erschütterungen ausgebildet ist. Des Weiteren betrifft die Erfindung ein Wälzlager zur Durchführung des Verfahrens.

In manchen maschinenbautechnischen Anwendungen, insbesondere in Windenergieanlagen, tritt immer wieder das Problem auf, dass das Wälzlager, das zur Lagerung von Bauteilen der Anlage benötigt wird, bereits nach einer Gebrauchsdauer ausfällt, die weit unter der erwarteten Gebrauchsdauer liegt. Im Ergebnis liegt lediglich die Reklamation vor, dass die vorgesehene Gebrauchsdauer nicht erreicht wurde, ohne dass es möglich ist, den maßgeblichen Grund für den vorzeitigen Schaden anzugeben.

Durch einen solchen vorzeitigen Schaden können erhebliche Kosten verursacht werden, weshalb stets die Bemühung besteht, besagte Schädigungen zu vermeiden oder - falls dieses bereits stattgefunden haben - frühzeitig einen Ersatz für das Wälzlager bereitzustellen, so dass spätere Unterbrechungen im regulären Betrieb der maschinenbautechnischen Anlage vermieden werden können.

Dem Lagerhersteller ist es nach Rücklieferung des Lagers infolge einer Beanstandung oft nicht möglich, gezielte Maßnahmen zur Verbesserung der Situation zu ergreifen, da kein Rückschluss auf die Schadensursache möglich ist. Dies gilt insbesondere für teure Großlager, wie sie bei Windenergieanlagen eingesetzt werden.

Der Erfindung liegt die **Aufgabe** zugrunde, ein Verfahren vorzuschlagen und ein entsprechendes Wälzlager bereitzustellen, mit dem es möglich ist, eine bessere Zuordnung der Schadensereignisse zu erreichen, wodurch es möglich werden soll, an den problematischen Stellen, die schadensursächlich sind, Abhilfemaßnahmen einleiten zu können. Damit soll die Gebrauchsdauer von Wälzlagern, insbesondere von Großlagern, wie sie beispielsweise in Windenergieanlagen benötigt werden, erhöht werden.

Die **Lösung** dieser Aufgabe durch die Erfindung ist dadurch gekennzeichnet, dass das Verfahren die Schritte aufweist:
a) Herstellen des Wälzlagers und Ausstattung des Wälzlagers mit dem mindestens einen Sensorelement und dem Speicherelement;
b) Aktivieren des Sensorelements und/oder des Speicherelements zur Messung und Speicherung von Erschütterungen;
c) Transport des Wälzlagers zu seinem Bestimmungsort;
d) Einbau des Wälzlagers in die maschinenbautechnische Anwendung, für die es vorgesehen ist;
e) Auslesen der im Speicherelement gespeicherten Daten.

Als Sensorelement wird bevorzugt ein Beschleunigungssensor eingesetzt, der in mindestens einer Raumrichtung, vorzugsweise in allen drei Raumrichtungen, Beschleunigungen messen kann.

Im Speicherelement werden die gemessenen Erschütterungen insbesondere als Funktion der Zeit gespeichert.

Die Erschütterungen werden weiterhin bevorzugt auf ein Bezugssystem bezogen gemessen, das auf den Lagerring festgelegt ist, der das Sensorelement trägt.

Vorgesehen kann auch werden, dass im Anschluss an obigen Schritt d) Erschütterungen während des Betriebs des Wälzlagers gemessen und gespeichert werden.

Das Verfahren kommt mit besonderem Vorteil bei einem Wälzlager zum Einsatz, das in einer Windenergieanlage verwendet wird.

Eine bevorzugte Weiterbildung sieht vor, dass das Verfahren weiter die Schritte umfasst:
- Während obigem Schritt a): Versehen der beiden Lagerringe mit je einer Markierung an einer Umfangsstelle;
- Vor obigem Schritt c): Ausrichten der beiden Lagerringe bezüglich ihrer relativen Umfangsposition mittels der Markierungen an den Lagerringen.

Diese Vorgehensweise erlaubt folgende Überwachung des Lagers: Vor dem Transport wird nicht nur das mindestens eine Sensorelement aktiviert, um Erschütterungen während des Transports und der nachfolgenden Montage detektieren zu können. Ferner werden die beiden Lagerringe relativ zueinander anhand der Umfangs-Markierungen relativ zueinander ausgerichtet (die Markierungen werden namentlich an einer Umfangsstelle über einander ausgerichtet). Das Lager darf erst nach abgeschlossener Montage drehen, d. h. der Innenring darf erst dann relativ zum Außenring drehen. Eine solche Drehung vor Abschluss der Montage weist auf Unregelmäßigkeiten während des Transports bzw. während der Montage hin und liefert somit in der Zusammenschau mit den per Sensor gemessenen Erschütterungen eine verbesserte Beurteilung über die Handhabung des Lagers zwischen der Lagerfabrik und dem fertig montierten Zustand in der maßgeblichen Anwendung.

Das Wälzlager zur Durchführung des Verfahrens zeichnet sich dadurch aus, dass an einer Umfangsposition des Innenrings und/oder des Außenrings des Wälzlagers ein Sensorelement angeordnet ist, das zur Erfassung von Erschütterungen ausgebildet ist.

Ein Speicherelement kann unmittelbar mit dem Sensorelement verbunden sein. Das Sensorelement ist bevorzugt ein Beschleunigungssensor, der in allen drei Raumrichtungen Beschleunigungen messen kann.

Zur Aufnahme des Sensorelements ist bevorzugt eine Ausnehmung in den Lagerring eingearbeitet, die im stirnseitigen Bereich des Lagerrings angeordnet ist, insbesondere außerhalb der Lastzone des Lagers.

Die beiden Lagerringe sind bevorzugt mit je einer Markierung an einer Umfangsstelle versehen.

Erfindungsgemäß ist also eine Überwachung des Lagers vorgehen, wobei die hierfür benötigten Elemente in das Lager selber integriert ist ("onboard supervision"). Hiermit soll ab dem Zusammenbau des Lagers beim Hersteller bis zum regulären Betrieb des Lagers - und gegebenenfalls auch noch während des regulären Betriebs - erfasst werden, welche Beaufschlagung das Lager durch Vibrationen bzw. Erschütterungen erleidet.

Die aufgezeichneten, d. h. gespeicherten Daten können später ausgewertet werden, um verbessert zuordnen zu können, aufgrund welcher Belastung durch Erschütterungen Schädigungen des Lagers stattgefunden haben. Hier stehen insbesondere starke Erschütterungen während des Transports im Verdacht, Schädigungen zu bewirken. Dies kann mit der erfindungsgemäßen Vorgehensweise gezielt und quantifiziert nachvollzogen werden.

Es besteht auch die Möglichkeit, nach dem Transport und gegebenenfalls nach der Montage des Lagers zur oder in die maschinenbautechnische Anwendung, z. B. in eine Windenergieanlage, durch Auslesen des Speichers und Auswertung der Daten zu entscheiden, ob der reguläre Betrieb mit der Lagerung erfolgen soll oder ob gegebenenfalls Anzeichen vorhanden sind, dass ein frühzeitiger Lagerausfall möglich ist. So kann im Vorfeld eines Lagerausfalls reagiert werden.

Die Erfindung schlägt also eine Sensorik vor, die an zumindest einem der Lagerringe angeordnet wird, um bereits ab dem Zusammenbau des Lagers feststellen zu können, welchen Erschütterungen das Lager ausgesetzt ist.

Hiermit kann in sehr vorteilhafter Weise insbesondere festgestellt werden, ob es schon während des Transports des Lagers zu seinem Bestimmungsort zu übermäßigen Erschütterungen kam. Ist dies der Fall, können sich beispielsweise Stillstandsmarkierungen ("Flase Brinelling") ausbilden, die für den späteren Gebrauch des Lagers sehr nachteilig sind.

Die Erfassung von Erschütterungen umfasst aber auch den Einbau des Lagers in seine maschinenbautechnische Anwendung, da auch hier gegebenenfalls durch fehlerhaftes Vorgehen bei der Montage eine Schädigung des Lagers erfolgen kann, so dass es nicht mehr seine volle kalkulierte Gebrauchsdauer erreicht.

Möglich ist es auch, nach Transport und Montage des Lagers die Überwachung mittels der integrierten Sensorik fortzusetzen, um so auch Unregelmäßigkeiten während des normalen Betriebs zu erfassen.

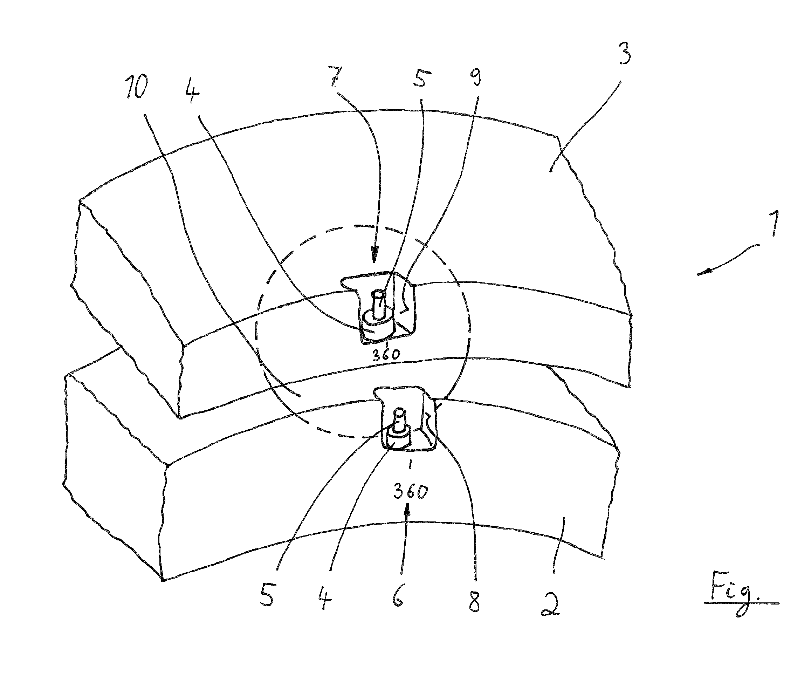

In der Zeichnung ist ein Ausführungsbeispiel der Erfindung dargestellt. Die einzige Figur zeigt in perspektivischer Darstellung einen Teil eines Wälzlagers.

In der Figur ist ein Teil eines Wälzlagers 1 skizziert, das einen Innenring 2 und einen Außenring 3 aufweist; zwischen den Ringen 2, 3 sind Wälzkörper - vorliegend in Form von Kugeln 10 - angeordnet.

An einer definierten Umfangposition 6 (markiert mit "360" für den vollen Umfangswinkel) am Innenring 2 bzw. an der Umfangsposition 7 am Außenring 3 ist im stirnseitigen Bereich des Lagerings jeweils eine Ausnehmung 8 bzw. 9 eingearbeitet. In diesen Ausnehmungen 8, 9 ist je ein Sensorelement 4 in Form eines Beschleunigungssensors montiert. Der Beschleunigungssensor 4 ist in der Lage, Beschleunigungen in allen drei Raumrichtungen zu erfassen.

Die vom Beschleunigungssensor 4 gemessenen Beschleunigungen werden in einem Speicherelement 5 gespeichert, das mit dem Sensorelement 4 verbunden ist. Im Speicherelement 5 werden die gemessenen Beschleunigungen als Funktion der Zeit aufgezeichnet. Hierfür sind noch entsprechende Mittel vorzusehen, d. h. ein Mikroprozessor mit integrierter Uhr, der die gemessenen Beschleunigungen zusammen mit dem Zeitpunkt, zu dem sie auftreten, im Speicherelement 5 hinterlegt.

Durch die Anordnung des Beschleunigungssensors 4 an einer definierten Umfangsposition 6, 7 und aufgrund der Tatsache, dass in allen drei Raumrichtungen Beschleunigungen gemessen werden können, kann nicht nur der Betrag einer Beschleunigung, die auf den Lagerring wirkt, erfasst werden, sondern auch die Richtung, bezogen auf ein Ring-internes Bezugssystem.

Im Ausführungsbeispiel ist sowohl am Innenring 2 als auch am Außenring 3 je ein Beschleunigungssensor 4 angeordnet. Dies ist aber keinesfalls zwingend. Es kann ausreichend sein, nur einen Beschleunigungssensor 4 vorzusehen, der dann bevorzugt an dem Lagerring angeordnet wird, der bestimmungsgemäß der nicht-drehende Lagerring in der maschinenbautechnischen Anlage ist, in der das Lager eingesetzt wird.

Werden zwei Sensoren 4 am Innen- und Außenring eingesetzt, empfiehlt sich die Demontage des Sensors vor Inbetriebnahme des Wälzlagers 1 von dem Ring, der im Betrieb rotiert.

Anhand der gespeicherten Beschleunigungswerte und zugehörigen Zeiten ihres Auftretens kann genau nachvollzogen werden, welchen Erschütterungen bzw. Vibrationen das Lager vom Zeitpunkt seines Zusammenbaus an ausgesetzt war.

Die Schadensursache im Falle eines vorzeitigen Endes der Gebrauchsdauer des Lagers kann so systematisch nachvollzogen werden und gezielte Abhilfemaßnahmen eingeleitet werden.

### Bezugszeichenliste

- 1: Wälzlager
- 2: Lagerring (Innenring)
- 3: Lagerring (Außenring)
- 4: Sensorelement
- 5: Speicherelement
- 6: Umfangsposition
- 7: Umfangsposition
- 8: Ausnehmung
- 9: Ausnehmung
- 10: Wälzkörper (Kugel)

## Patentansprüche

1. Verfahren zur Überwachung eines Wälzlagers (1), wobei an oder in mindestens einem der Lagerringe (2, 3) des Wälzlagers (1) ein Sensorelement (4) angeordnet ist, das mit einem Speicherelement (5) in Verbindung steht, wobei das Sensorelement (4) zur Erfassung von Erschütterungen ausgebildet ist,
**dadurch gekennzeichnet,**
**dass** das Verfahren die Schritte aufweist:
a) Herstellen des Wälzlagers (1) und Ausstattung des Wälzlagers (1) mit dem mindestens einen Sensorelement (4) und dem Speicherelement (5);
b) Aktivieren des Sensorelements (4) und/oder des Speicherelements (5) zur Messung und Speicherung von Erschütterungen;
c) Transport des Wälzlagers (1) zu seinem Bestimmungsort;
d) Einbau des Wälzlagers (1) in die maschinenbautechnische Anwendung, für die es vorgesehen ist;
e) Auslesen der im Speicherelement (5) gespeicherten Daten.

2. Verfahren nach Anspruch 1, **dadurch gekennzeichnet, dass** als Sensorelement ein Beschleunigungssensor eingesetzt wird, der in mindestens einer Raumrichtung, vorzugsweise in allen drei Raumrichtungen, Beschleunigungen messen kann.

3. Verfahren nach Anspruch 1 oder 2, **dadurch gekennzeichnet, dass** im Speicherelement (5) die gemessenen Erschütterungen als Funktion der Zeit gespeichert werden.

4. Verfahren nach Anspruch 2 oder 3, **dadurch gekennzeichnet, dass** die Erschütterungen auf ein Bezugssystem bezogen gemessen werden, das auf den Lagerring (2, 3) festgelegt ist, der das Sensorelement (4) trägt.

5. Verfahren nach einem der Ansprüche 1 bis 4, **dadurch gekennzeichnet, dass** im Anschluss an Schritt d) gemäß Anspruch 1 Erschütterungen während des Betriebs des Wälzlagers (1) gemessen und gespeichert werden.

6. Verfahren nach einem der Ansprüche 1 bis 5, **dadurch gekennzeichnet, dass** es bei einem Wälzlager (1) durchgeführt wird, das in einer Windenergieanlage eingesetzt wird.

7. Verfahren nach einem der Ansprüche 1 bis 6, **dadurch gekennzeichnet, dass** es weiter umfasst:
- Während Schritt a) von Anspruch 1: Versehen der beiden Lagerringe (2, 3) mit je einer Markierung an einer Umfangsstelle;
- Vor Schritt c) von Anspruch 1: Ausrichten der beiden Lagerringe (2, 3) bezüglich ihrer relativen Umfangsposition mittels der Markierungen an den Lagerringen (2, 3).

8. Wälzlager (1) zur Durchführung des Verfahrens nach einem der Ansprüche 1 bis 7,
**dadurch gekennzeichnet,**
**dass** an einer Umfangsposition (6, 7) des Innenrings (2) und/oder des Außenrings (3) des Wälzlagers (1) ein Sensorelement (4) angeordnet ist, das zur Erfassung von Erschütterungen ausgebildet ist.

9. Wälzlager nach Anspruch 8, **dadurch gekennzeichnet, dass** ein Speicherelement (5) unmittelbar mit dem Sensorelement (4) verbunden ist.

10. Wälzlager nach Anspruch 8 oder 9, **dadurch gekennzeichnet, dass** das Sensorelement (4) ein Beschleunigungssensor ist, der in allen drei Raumrichtungen Beschleunigungen messen kann.

11. Wälzlager nach einem der Ansprüche 8 bis 10, **dadurch gekennzeichnet, dass** zur Aufnahme des Sensorelements (4) eine Ausnehmung (8, 9) in den Lagerring (2, 3) eingearbeitet ist, die im stirnseitigen Bereich des Lagerrings (2, 3) angeordnet ist.

12. Wälzlager nach einem der Ansprüche 8 bis 11, **dadurch gekennzeichnet, dass** die beiden Lagerringe (2, 3) mit je einer Markierung an einer Umfangsstelle versehen sind.
